# EUROPÄISCHE PATENTSCHRIFT

(11) **EP 0 874 785 B1**
(45) Veröffentlichungstag und Bekanntmachung des Hinweises auf die Patenterteilung: **24.10.2001**
(21) Anmeldenummer: 97920448.4
(22) Anmeldetag: 13.05.1997
(51) Int. Cl.: C02F 3/20, B01F 3/04

(54) **VERFAHREN UND VORRICHTUNG ZUM EINTRAGEN EINES GASES ODER EINES GASGEMISCHES IN EINE FLÜSSIGKEIT**
METHOD AND DEVICE FOR INTRODUCING A GAS OR GAS MIXTURE INTO A LIQUID
PROCEDE ET DISPOSITIF POUR INTRODUIRE UN GAZ OU UN MELANGE GAZEUX DANS UN LIQUIDE

(30) Priorität: 13.05.1996 AT 83796
(43) Veröffentlichungstag der Anmeldung: 04.11.1998
(73) Patentinhaber: Staudinger, Johann, 4850 Timelkam (AT)
(72) Erfinder: Staudinger, Johann, 4850 Timelkam (AT)
(74) Vertreter: Hübscher, Helmut, Dipl.-Ing.
(86) Internationale Anmeldenummer: AT9700093
(87) Internationale Veröffentlichungsnummer: WO9743219

(56) Entgegenhaltungen:
- WO-A-92/00798
- US-A- 4 385 989
- US-A- 4 581 137
- US-A- 5 049 320

## Beschreibung

Die Erfindung bezieht sich auf ein Verfahren zum Eintragen eines Gases- oder eines Gasgemisches in eine Flüssigkeit mit Hilfe eines Filters, durch das das Gas oder das Gasgemisch in die Flüssigkeit eingebracht wird, die in einer parallel zur Filteroberfläche verlaufenden Strömung geführt wird, sowie auf eine Vorrichtung zur Durchführung des Verfahrens.

Um beispielsweise Wasser mit Sauerstoff anzureichern, ist es bekannt, im Bodenbereich eines Behälters einen Belüfter vorzusehen, über dessen Rotor Luft und Wasser angesaugt und das Wasserluftgemisch über eine Leiteinrichtung so wieder in den Behälter ausgestoßen wird, daß möglichst feine Bläschen gleichmäßig über den Behälterquerschnitt verteilt aufsteigen. Damit eine besonders feine Gasbläschenverteilung in der Flüssigkeit erreicht werden kann, wurde außerdem vorgeschlagen, das einzutragende Gas durch einen beispielsweise gesinterten Filterkörper der Flüssigkeit zuzuführen, so daß durch die feinen Poren eines solchen Filters entsprechend feine Gasbläschen erzwungen werden können. Trotz dieser zum Teil aufwendigen Maßnahmen blieb die Eintragungsrate jedoch hinter den Erwartungen zurück.

Um Gas über einen porösen Filterkörper in eine Flüssigkeit einzutragen, wurde bereits vorgeschlagen (US 5 049 320 A), einen zylindrischen Druckbehälter vorzusehen, in dem die mit einem Gas anzureichernde Flüssigkeit in einer Schraubenbewegung mit einer hohen Umlaufgeschwindigkeit um ein zentrales Filterrohr geführt wird, das mit Druckgas beaufschlagt wird. Zusätzlich ist am Mantel des Druckbehälters wenigstens eine weitere Filterplatte angeordnet, die mit Druckgas beaufschlagt wird, das die Filterplatte sowie eine die Filterplatte gegenüber der Flüssigkeit abdeckende Lochplatte durchsetzt. Aufgrund der erforderlichen Druckbehandlung und der hohen Umlaufgeschwindigkeit von über 2500 U/min ist eine solche Gaseintragung mit einem hohen Energieaufwand verbunden, und zwar bei einem vergleichsweise geringen Wirkungsgrad bezüglich der Gaseintragung.

Der Erfindung liegt somit die Aufgabe zugrunde, ein Verfahren der eingangs geschilderten Art anzugeben, mit dessen Hilfe eine Flüssigkeit in einfacher und wirkungsvoller Weise mit einem Gas oder einem Gasgemischangereichert werden kann.

Die Erfindung löst die gestellte Aufgabe dadurch, daß die Flüssigkeit mit einer Mindestströmungsgeschwindigkeit von 0,5 m/s über ein multifiles Filtergewebe geleitet wird, das auf der der Flüssigkeitsströmung abgekehrten Seite an einer Stützfläche abgestützt wird, und daß das Gas oder das Gasgemisch dem zumindest bereichsweise lose an der Stützfläche anliegenden Filtergewebe entlang des Strömungsweges der Flüssigkeit örtlich begrenzt durch die Stützfläche zugeführt wird.

Die durch diese Maßnahme erzielbare hohe Gaseintragungsrate beruht offensichtlich darauf, daß im Bereich der Oberflächenschicht des multifilen Filtergewebes die oberflächenparallele Flüssigkeitsströmung mit dem angebotenen Gas bzw. Gasgemisch in einer für die Gaseintragung vorteilhaften Art gemischt wird, weil die zum Teil in das Filtergewebe eindringende Flüssigkeit aufgrund der multifilen Fadenstruktur vielfältig abgelenkt, verzögert und beschleunigt wird, was wegen der vorgegebenen Mindestgeschwindigkeit der Flüssigkeitsströmung gegenüber dem Filtergewebe eine Injektorwirkung auf das Gas bzw. Gasgemisch nach sich zieht, so daß es keines besonderen Gasdruckes für die Gaseintragung bedarf. Die mit einem solchen Gaseintragungsverfahren erzielbare Wirkung hängt allerding in überraschender Weise von einer entsprechenden Beschränkung des Gasangebotes im Bereich des Filtergewebes ab. Damit eine geeignete, selbstregelnde Gaszuführung sichergestellt werden kann, ist nicht nur eine örtlich begrenzte Gaszufuhr entlang des Strömungsweges der Flüssigkeit sicherzustellen, sondern auch für ein zumindest bereichsweise loses Anliegen des Filtergewebes an der Stützfläche zu sorgen, wobei durch das Zusammenwirken dieser Maßnahmen eine außerordentlich hohe Gaseintragungsrate erreicht werden kann.

Wie bereits ausgeführt wurde, ist für die erfindungsgemäße Wirkung eine Mindestgeschwindigkeit für die Flüssigkeitsströmung von 0,5 m/s maßgebend. Mit einer Geschwindigkeitssteigerung läßt sich auch die Gaseintragungsrate steigern. Allerdings ist eine Geschwindigkeitssteigerung mit einer entsprechenden Vergrößerung des Energieeinsatzes verbunden. Aus diesem Grund hat sich in der Praxis eine Strömungsgeschwindigkeit von 1 m/s bis 3 m/s, vorzugsweise von 1,8 m/s bis 2,5 m/s als vorteilhaft erwiesen, mit der die Flüssigkeit über die Oberfläche des Filtergewebes geführt wird.

Zur Durchführung des erfindungsgemäßen Verfahrens kann eine Vorrichtung eingesetzt werden, die durch wenigstens ein mit vereinzelten radialen Durchtrittsöffnungen versehenes, vom schlauchförmigen Filtergewebe umhülltes Gaszuführrohr gekennzeichnet ist, das in einen einen Zu- und einen Ablauf für die zu begasende Flüssigkeit aufweisenden Strömungsbehälter eingesetzt wird. Durch die vereinzelten radialen Durchtrittsöffnungen des Gaszuführrohres kann das das Gaszuführrohr umhüllende Filtergewebe in einfacher Weise mit einem Gas bzw. Gasgemisch beaufschlagt werden, um die entlang dieses Gaszuführrohres durch den Strömungsbehälter strömende Flüssigkeit mit diesem Gas bzw. Gasgemisch anzureichern. Der Außenmantel des Gaszuführrohres bildet dabei die Stützfläche für das Filtergewebe. Besonders vorteilhafte Konstruktionsverhältnisse können in diesem Zusammenhang erreicht werden, wenn der Strömungsbehälter aus einem zum Gaszuführrohr koaxialen Behälterrohr besteht, wobei im Ringraum zwischen dem Behälterrohr und dem Gaszuführrohr wenigstens ein schraubenförmiger Leitkörper für die Flüssigkeitsströmung vorgesehen ist. Durch diesen schraubenförmigen Leitkörper wird der Ringraum zwischen dem Gaszuführrohr und dem Behälterrohr zu einem schraubenförmig verlaufenden Strömungskanal unterteilt, durch den die zu begasende Flüssigkeit entlang des Filtergewebes zwischen dem Zu- und Ablauf des Strömungsbehälters strömt. Besteht der Leitkörper aus einer das schlauchförmige Filtergewebe am Gaszuführrohr festhaltenden Schraubenfeder, so bedarf es keiner zusätzlichen Maßnahmen zur Befestigung des Filtergewebes am Gaszuführrohr.

Eine andere Möglichkeit, die zu begasende Flüssigkeit entlang des ein Gaszuführrohr umhüllenden Filtergewebeschlauches zu führen, besteht darin, das schraubenförmig verlaufende Gaszuführrohr koaxial zu einem in den Strömungsbehälter eingesetzten Pumpenrotor anzuordnen. Über den Pumpenrotor wird in diesem Fall die Flüssigkeit in eine Umlaufströmung entlang des schraubenförmig verlaufenden Gaszuführrohres gebracht, so daß wiederum im Bereich des Gaszuführrohres eine zur Oberfläche des Filtergewebes parallele Flüssigkeitsströmung erhalten wird.

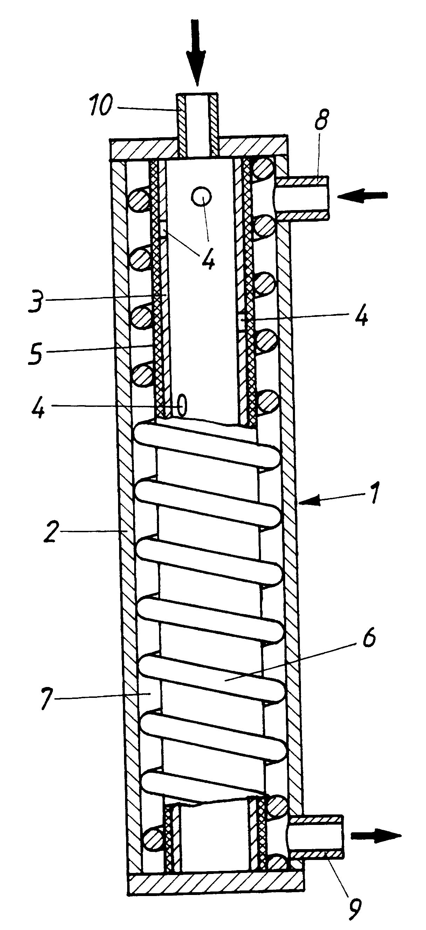

Anhand der Zeichnung wird das erfindungsgemäße Verfahren näher erläutert, und zwar wird eine erfindungsgemäße Vorrichtung zum Eintragen eines Gases- oder eines Gasgemisches in eine Flüssigkeit in einem vereinfachten Längsschnitt gezeigt.

Die dargestellte Vorrichtung weist einen Strömungsbehälter 1 aus einem Behälterrohr 2 auf, in das ein Gaszuführrohr 3 koaxial eingesetzt ist. Dieses mit vereinzelten Durchtrittsöffnungen 4 versehene Gaszuführrohr 3 wird von einem schlauchförmigen Filtergewebe 5 aus mulitfilen Fäden umhüllt. In den Ringraum zwischen dem Behälterrohr 2 und dem Gaszuführrohr 3 ist eine sich über die Länge des Behälterrohres 2 erstreckende Schraubenfeder 6 eingesetzt, die das zwischen den einzelnen Windungen der Schraubenfeder 6 lose am Gaszuführrohr 3 anliegende Filtergewebe 5 am Gaszuführrohr 3 festhält. Zwischen den einzelnen Windungen der Schraubenfeder 6, die sowohl am Filtergewebe 5 als auch am Innenmantel des Behälterrohres 2 anliegt, ergibt sich ein Strömungskanal 7 für die zu begasende Flüssigkeit, die dem Strömungsbehälter 1 über einen Zulauf 8 zugeführt und aus diesem Strömungsbehälter 1 über einen Ablauf 9 abgezogen wird. Die Gaszufuhr erfolgt über einen stirnseitigen Anschlußstutzen 10. Das in das Gaszuführrohr 3 strömende Gas oder Gasgemisch beaufschlagt durch die vereinzelt angeordneten Durchtrittsöffnungen 4 das Filtergewebe 5 von innen, entlang dessen Außenseite die Flüssigkeit durch den Strömungskanal 7 geführt wird. Aufgrund der Gewebestruktur insbesondere im Bereich der äußeren Oberflächenschichte wird die zum Teil in das Filtergewebe 5 eindringende Flüssigkeit in einer für die Gaseintragung vorteilhaften Weise mit dem das Filtergewebe 5 durchsetzenden Gas bzw. Gasgemisch vermischt, wobei die sich ständig ändernden Druckverhältnissse im Oberflächenbereich, die zufolge der vielfältigen Ablenkungen der Flüssigkeit an den multifilen Gewebefäden und der damit verbundenen Beschleunigungen und Verzögerungen der Flüssigkeitsströmung auftreten, für die überraschend hohe Gaseintragungsrate mitverantwortlich sein dürften. In diesem Zusammenhang ist festzuhalten, daß sich aufgrund der vorgegebenen Mindestströmungsgeschwindigkeit von 0,5 m/s eine Injektorwirkung auf die Gasströmung durch das Filtergewebe 5 einstellt, welche Injektorwirkung naturgemäß mit der Strömungsgeschwindigkeit gesteigert werden kann.

Um in einem Versuch Abwasser mit Sauerstoff anzureichern, dessen Sauerstoffgehalt bereits 8 mg/l betrug, wurde eine Vorrichtung mit einem Strömungsbehälter 1 eingesetzt, dessen Behälterrohr 2 einen Innendurchmesser von 50 mm und eine Länge von 1,8 m aufwies. Das koaxial in dieses Behälterrohr 2 eingesetzte Gaszuführrohr 3 war mit vier über den Rohrmantel verteilten Durchtrittsöffnungen 4 (Durchmesser 5 mm) versehen und hatte einen Außendurchmesser von 20 mm. Der dieses Gaszuführrohr 3 umhüllende Filtergewebeschlauch bestand aus einem Polyestergewebe mit einem Gewicht von 192 g/m², einer Dicke von 18 5µm und einer Luftdurchlässigkeit von 440 l/m²/s. Der Ringraum zwischen dem Behälterrohr 2 und dem Gaszuführrohr 3 wurde durch eine Schraubenfeder in einen Strömungskanal unterteilt, der 45 Windungen aufwies. Bei einem Zulaufdruck des Abwassers von 2,5 bar und einem Ablaufdruck von 1,7 bar wurde ein Durchsatz von 12 m³/h erreicht. Mit einem Sauerstoffangebot von 100 l/h konnte eine Sauerstoffanreicherung des Abwassers von 23 bis 26 mg/l erreicht werden. Wurde das Sauerstoffangebot auf 50 l/h vermindert, so betrug der Sauerstoffgehalt des Abwasser noch immer 15 bis 17 mg/l. Bei einer Sauerstoffzufuhr von 20 l/h konnten 13 bis 14 mg/l Sauerstoff im Abwasser gemessen werden.

## Patentansprüche

1. Verfahren zum Eintragen eines Gases- oder eines Gasgemisches in eine Flüssigkeit mit Hilfe eines Filters, durch das das Gas oder das Gasgemisch in die Flüssigkeit eingebracht wird, die in einer parallel zur Filteroberfläche verlaufenden Strömung geführt wird, **dadurch gekennzeichnet, daß** die Flüssigkeit mit einer Mindestströmungsgeschwindigkeit von 0,5 m/s über ein multifiles Filtergewebe geleitet wird, das auf der der Flüssigkeitsströmung abgekehrten Seite an einer Stützfläche abgestützt wird, und daß das Gas oder das Gasgemisch dem zumindest bereichsweise lose an der Stützfläche anliegenden Filtergewebe entlang des Strömungsweges der Flüssigkeit örtlich begrenzt durch die Stützfläche zugeführt wird.

2. Verfahren nach Anspruch 1, **dadurch gekennzeichnet, daß** die Flüssigkeit mit einer Strömungsgeschwindigkeit von 1 m/s bis 3 m/s über die Oberfläche des Filtergewebes geführt wird.

3. Verfahren nach Anspruch 2, **dadurch gekennzeichnet, daß** die Flüssigkeit mit einer Strömungsgeschwindigkeit von 1,8 m/s bis 2,5 m/s über die Oberfläche des Filtergewebes geführt wird.

4. Vorrichtung zur Durchführung des Verfahrens nach einem der Ansprüche 1 bis 3, **gekennzeichnet durch** wenigstens ein mit vereinzelten radialen Durchtrittsöffnungen (4) versehenes, vom schlauchförmigen Filtergewebe (5) umhülltes Gaszuführrohr (3), das in einen einen Zu- und einen Ablauf (8 bzw. 9) für die zu begasende Flüssigkeit aufweisenden Strömungsbehälter (1) eingesetzt ist.

5. Vorrichtung nach Anspruch 4, **dadurch gekennzeichnet, daß** der Strömungsbehälter (1) aus einem zum Gaszuführrohr (3) koaxialen Behälterrohr (2) besteht und daß im Ringraum zwischen dem Behälterrohr (2) und dem Gaszuführrohr (3) wenigstens ein schraubenförmiger Leitkörper für die Flüssigkeitsströmung vorgesehen ist.

6. Vorrichtung nach Anspruch 5, **dadurch gekennzeichnet, daß** der Leitkörper aus einer das schlauchförmige Filtergewebe (5) am Gaszuführrohr (3) festhaltenden Schraubenfeder (6) besteht.

7. Vorrichtung nach Anspruch 4, **dadurch gekennzeichnet, daß** das schraubenförmig verlaufende Gaszuführrohr (3) koaxial zu einem in den Strömungsbehälter (1) eingesetzten Pumpenrotor angeordnet ist.

## Claims

1. A method of introducing a gas or a gas mixture into a liquid by means of a filter, through which the gas or the gas mixture is introduced into the liquid, which is guided in a flow extending parallel to the filter surface, **characterised in that** the liquid is taken at a minimum flow speed of 0.5 m/s through a multifil filter cloth which is supported on a support surface on the side remote from the liquid flow, and **in that** the gas or the gas mixture is fed along the flow path of the liquid locally limited by the support surface, to the filter cloth which bears loosely against the support surface at least in zones.

2. A method according to claim 1, **characterised in that** the liquid is taken through the surface of the filter cloth at a flow speed of 1 m/s to 3 m/s.

3. A method according to claim 2, **characterised in that** the liquid is taken through the surface of the filter cloth at a flow speed of 1.8 m/s to 2.5 m/s.

4. Apparatus for performing the method according to any one of claims 1 to 3, **characterised by** at least one gas supply tube (3) which is provided with isolated radial passage openings (4) and which is enclosed by the tubular filter cloth (5) and which is inserted in a flow container (1) having an inlet and an outlet (8 and 9 respectively) for the liquid for gasification.

5. Apparatus according to claim 4, **characterised in that** the flow container (1) consists of a container tube (2) coaxial with the gas supply tube (3) and **in that** at least one helical guide member for the liquid flow is provided in the annular space between the container tube (2) and the gas supply tube (3).

6. Apparatus according to claim 5, **characterised in that** the guide member consists of a helical spring (6) holding the tubular filter cloth (5) firmly on the gas supply tube (3).

7. Apparatus according to claim 4, **characterised in that** the helically extending gas supply tube (3) is disposed coaxially to a pump rotor inserted in the flow container (1).

## Revendications

1. Procédé pour introduire un gaz ou un mélange de gaz dans un liquide, à l'aide d'un filtre, au moyen duquel le gaz ou mélange de gaz est introduit dans le liquide, qui est guidé en un écoulement s'étendant parallèlement à la surface du filtre, **caractérisé en ce que** le liquide est guidé sous une vitesse d'écoulement minimal de 0,5 m/s sur un tissu filtrant multifils, qui est soutenu, sur la face opposée à l'écoulement de liquide, sur une phase d'appui, et **en ce que** le gaz ou le mélange de gaz est amené au au moins un tissu filtrant, appliqué au moins par zones de façon lâche sur la surface d'appui, le long de chemin suivi par l'écoulement de liquide, de façon localement limitée par la surface d'appui.

2. Procédé selon la revendication 1, **caractérisé en ce que** le liquide est guidé sur la surface du tissu filtrant, sous une vitesse d'écoulement de 1 m/s à 3 m/s.

3. Procédé selon la revendication 2, **caractérisé en ce que** le liquide est guidé sur la surface du tissu filtrant, sous une vitesse d'écoulement de 1,8 m/s à 2,5 m/s.

4. Dispositif de mise en oeuvre du procédé selon l'une des revendications 1 à 3, **caractérisé par** au moins un tube d'amenée de gaz (3), muni d'ouvertures de passage (4) radiales, individualisées, tube enveloppé par un tissu filtrant (5) en forme de tuyau, le tube étant inséré dans un récipient d'écoulement (1), présentant une amenée et une évacuation (8, respectivement 9) pour le liquide à charger en gaz.

5. Dispositif selon la revendication 1, **caractérisé en ce que** le récipient d'écoulement (1) est constitué d'un tube de récipient (2) coaxial par rapport au tube d'amenée de gaz (3), et **en ce que**, dans l'enceinte annulaire entre le tube de récipient (2) et le tube d'amenée de gaz (3), est prévu au moins un corps de guidage à forme hélicoïdale, pour l'écoulement de liquide.

6. Dispositif selon la revendication 5, **caractérisé en ce que** le corps de guidage est constitué d'un ressort hélicoïdal (6), qui assure la fixation du tissu filtrant (5) en forme de tuyau sur le tube d'amenée de gaz (3).

7. Dispositif selon la revendication 4, **caractérisé en ce que** le tube d'amenée de gaz (3), s'étendant en forme d'hélice, est disposé coaxialement par rapport à un rotor de pompe, inséré dans le récipient d'écoulement (1).
